# EUROPÄISCHE PATENTSCHRIFT

(11) **EP 2 082 899 B1**
(45) Veröffentlichungstag und Bekanntmachung des Hinweises auf die Patenterteilung: **18.05.2011**
(21) Anmeldenummer: 08171878.5
(22) Anmeldetag: 17.12.2008
(51) Int. Cl.: B60C 1/00, C08L 9/00, C08L 21/00, C08K 3/04, C08K 3/06, C08K 3/36, C08K 5/40

(54) **Kautschukmischung mit verbesserter Tieftemperaturflexibilität**
Natural rubber mixture with improved low temperature flexibility
Mélange de caoutchouc doté d'une flexibilité à basse température améliorée

(30) Priorität: 18.01.2008 DE 102008004952
(43) Veröffentlichungstag der Anmeldung: 29.07.2009
(73) Patentinhaber: Continental Reifen Deutschland GmbH, 30165 Hannover (DE)
(72) Erfinder: Weinreich, Hajo, Dr., 31840, Hessisch Oldendorf (DE)
(74) Vertreter: Finger, Karsten

(56) Entgegenhaltungen:
- EP-A- 0 283 552
- EP-A- 1 035 164
- EP-A- 1 357 150
- EP-A- 1 445 277
- EP-A- 1 561 780
- EP-A- 1 674 519
- GB-A- 964 931
- US-A- 4 654 404
- US-A- 5 576 376
- US-A1- 2006 041 049
- US-A1- 2007 231 532

## Beschreibung

Die Erfindung betrifft eine Kautschukmischung mit verbesserter Tieftemperaturflexibilität, insbesondere für Fahrzeugreifen, Riemen und Gurte.

Zur Beeinflussung der Mischungs- und Vulkanisateigenschaften werden der Kautschukmischung unterschiedlichste Zuschlagstoffe beigemischt und/oder es werden spezielle Polymere verwendet. Als Zuschlagstoffe seien beispielhaft an dieser Stelle Füllstoffe, z. B. Ruß und / oder Kieselsäure, Weichmacher, Alterungsschutzmittel und Vernetzungssysteme aus Schwefel, Beschleuniger und Aktivator genannt. Wird durch Variation der Mischung eine Eigenschaft verbessert, geht dies aber häufig mit einer Verschlechterung einer anderen Eigenschaft einher, so dass gewisse Zielkonflikte vorliegen. Bei Mischungen für Laufstreifen von Fahrzeugreifen bestehen solche Zielkonflikte beispielsweise im Hinblick auf das Abriebsverhalten, der Tieftemperaturflexibilität und der statischen Steifigkeit bei hohen Dehnungen. Eine hohe Tieftemperaturflexibilität kennzeichnet einen Reifen mit guten Wintereigenschaften, insbesondere Eisbremsen, und gutem Nassbremsen. Die Verwendung einer Mischung mit hoher Steifigkeit für den Reifenlaufstreifen sorgt hingegen für gutes Handling, hohe Haltbarkeit und geringen Abrieb.

Es ist beispielsweise bekannt, zur Erhöhung der Steifigkeit der Vulkanisate eines gegebenen Mischungssystems, gemessen über den Spannungswert bei Dehnung, den Füllgrad, d.h. den Anteil an Füllstoff in der Mischung, zu erhöhen, einen Füllstoff mit aktiver Oberfläche zu verwenden oder die Vemetzungsdichte zu erhöhen. Die vorgenannten Maßnahmen führen dabei aber zwangsläufig zu einer Verschlechterung der häufig gewünschten Tieftemperaturflexibilität der Vulkanisate.

Eine wichtige Zuschlagstoffgruppe, die unter anderen auf die Vernetzungsdichte und die physikalischen Eigenschaften der Vulkanisate Einfluss hat, ist die Gruppe der Vulkanisationsbeschleuniger. Für die Vulkanisation von Kautschukmischungen, die für die Herstellung von Fahrzeugreifen Verwendung finden, stehen verschiedene, dem Fachmann bekannte, Vulkanisationsbeschleunigergruppen zur Verfügung, die auch in Kombination miteinander eingesetzt werden können, wobei sich synergistische Effekte ergeben können. Die Vulkanisationsbeschleuniger dienen hierbei zur Aktivierung des als Vulkanisationsmittel eingesetzten Schwefels. Die Dosierung von Schwefel und Vulkanisationsbeschleuniger wird dabei individuell auf die zu erzielenden Eigenschaften der Reifenkautschukmischung angepasst. Diese zu erzielenden Eigenschaften werden durch das bei der Vulkanisation entstehende Netzwerk, z.B. zwischen Polymer und Füllstoffen, bedingt.

Der Stand der Technik soll nun anhand folgender Druckschriften näher beschrieben werden:
(D1) DT 25 36 674 A1
(D2) DE 42 07 028 A1
(D3) DE 40 36 420 A1
(D4) DE 40 37 756 A1
(D5) EP-A-1 052 270
(D6) DE 38 04 908 A1
(D7) EP-A-1 035 164
(D8) US 5,576,376
(D9) EP 1 674 519 A1
(D 10) US 2006/0041049 A1
(D11) EP 1 357 150 A1
(D12) US 4,654,404
(D13) GB 964,931
(D 14) US 2007/0231532 A1
(D15) EP 1 561 780 A1
(D16) EP 1 445 277 A1
(D17) EP 0 283 552 A

D1 beschreibt eine silikatische Füllstoffe enthaltende vernetzbare Kautschukmischung und ein Verfahren zur Vernetzung, vorzugsweise ohne Zugabe von freiem und elementarem Schwefel. Hierbei wird sehr allgemein eine vernetzbare Kautschukmischung beansprucht, die mindestens 1 bis 300 Gewichtsteile eines silikatischen Füllstoffes, 0 bis 300 Gewichtsteile Ruß und mindestens einen an sich für die Kautschukvulkanisation bekannten Vulkanisationsbeschleuniger in Mengen von 0,02 bis 10 Gewichtsteilen und mindestens ein Organosilan enthält. Es findet keine Beanspruchung eines definierten Polymersystems statt, ebenso wie über die zu verwendenden Füllstoffe keine spezifizierenden Angaben gemacht werden.

D2, D3 und D4 offenbaren Vulkanisate für Schläuche, Dichtungen, Rollringe und weitere technische Gummiartikel auf der Basis von Ethylen-Propylen-Dien-Kautschuk ohne Nitrosamintoxizität, die vorzugsweise spezielle Thiuram- und / oder Mercaptovulkanisationsmittel enthalten.

Aus D5, D6 und D7 sind z. B. Laufstreifenmischungen bekannt, die für einen guten Griff auf Eis unter anderem ein flüssiges Polymer, z. B. Polybutadien, enthalten. In D7 enthält die Mischung vorzugsweise ein flüssiges Polybutadien mit hohem Vinylgehalt als Ersatz für herkömmliche Weichmacheröle. Die in den Druckschriften beschriebenen Kautschukmischungen enthalten als Füllstoff nur Ruß. Die Verwendung von flüssigem Polybutadien in herkömmlichen Mischungen wirkt sich allerdings sehr negativ auf das Trockenbremsen von Reifen aus.

Kautschukmischungen, welche ausschließlich Ruß als Füllstoff enthalten sind aus D8, D9, D11,D12,D14, D15 und D16 bekannt.

In D8 soll Prozessierbarkeit verbessert werden, wobei als einzige Kautschukkomponente Styrolbutadienkautschuk (SBR) beschrieben wird.

In D9 wird eine Polymerlegierung beschrieben, wie sie ausschließlich für Kraftstoffleitungen, Innenverkleidungen für Automobile, Druckrollen und ähnliches Verwendung findet. Die Polymerlegierung besteht aus zwei verschiedenen Copolymeren und soll sich durch eine exzellente Ölbeständigkeit und Ozonbeständigkeit und Lösemittelbeständigkeit auszeichnen.

In D11 wird eine Kautschukmischung beschrieben, welche sich durch Zugabe eines sogenannten Ultrabeschleunigers durch verbesserte Vulkanisationseigenschaften, insbesondere hinsichtlich der Vulkanisationsdauer, auszeichnet.

In D 12 wiederum wird eine hitze- und ölbeständige Kautschukmischung beschrieben, die einen nitrilgruppenhaltigen Kautschuk enthält. Eine derartige Kautschukmischung wird z. B. für die Produktion von O-Ringen, Ventilen oder Membranen eingesetzt.

D 14 offenbart Kautschukmischungen, welche für Matten und Bodenbelege geeignet sind. Eine derartige Kautschukmischung enthält bereits vulkanisierte Kautschukpartikel.

Die in der D15 beschriebene Kautschukmischung soll die Brucheigenschaften und die Abriebsbeständigkeit verbessern. Die beschriebenen Kautschukmischungen enthalten als Vulkanisationsbeschleuniger einen Guanidin- und einen Sulfenamidbeschleuniger.

In D 16 wird eine Kautschukmischung offenbart, welche als einzige Polymerkomponente ein Styrolbutadien-Copolymer enthält und eine spezielle Zusammensetzung als Vulkanisationsbeschleuniger und ein dort näher spezifiziertes organisches Thiosulfat als Vulkanisationshilfsmittel. Eine derartige Kautschukmischung soll eine verbesserte thermische Ermüdungsbeständigkeit aufweisen ohne die Trockengriffeigenschaften zu beeinflussen.

Die in der D 10 beschriebene Kautschukmischung soll die Prozessierbarkeit verbessern. Die in der D10 dargestellten Ausführungsbeispiele enthalten als Beschleuniger ausschließlich Sulfenamidbeschleuniger und Guanidinbeschleuniger. Bei dem eingesetzten flüssigen Polymer handelt es sich um ein flüssiges Block-Copolymer, welches mit Hydroxyl-Gruppen terminiert ist.

D13 beschreibt einen Polymerblend und-die Herstellung des Polymerblends, welche sich durch eine verbesserte Prozessierbarkeit auszeichnet, insbesondere wenn kein Banbury-Mischer vorhanden ist. In den in der D 13 aufgeführten Ausführungsbeispielen findet sich überwiegend Ruß als HauptfüllstoffKomponente.

In D 17 wird anhand eines Ausführungsbeispiels mit Ruß als Füllstoffkomponente und Nitrilkautschuk NBR als Polymerkomponente gezeigt, dass der Einsatz von Tetrabenzylthiuramdisulfid dazu führt, dass keine kanzerogene Nitrosamine entstehen.

Der Erfindung liegt daher die Aufgabe zugrunde, eine Kautschukmischung bereitzustellen, die eine wesentliche Verbesserung der Tieftemperaturflexibilität bei gleichzeitiger Verbesserung der statischen Steifigkeit bei hohen Dehnungen gewährleistet.

Gelöst wird diese Aufgabe durch eine Kautschukmischung mit folgender Zusammensetzung:
- 30 - 100 phr zumindest eines festen Dienkautschukes;
- 5-50 phr zumindest eines niedrigviskosen und flüssigen Kautschuks;
- 0,1-10 phr Tetrabenzylthiuramdisulfid;
- 0,1 - 150 phr zumindest einer amorphen und / oder Fällungskieselsäure;
- 0 - 25 phr zumindest eines Kupplungsagenz;
- 1 - 100 phr zumindest eines Rußes;
- 2 - 200 phr weitere Zusatzstoffe.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird hierbei auf 100 Gewichtsteile der gesamten Masse aller in der Mischung vorhandenen festen Kautschuke bezogen.

Überraschenderweise wurde gefunden, dass durch die Kombination zumindest eines Dienkautschuks mit zumindest einem flüssigen Kautschuk und mit Tetrabenzylthiuramdisulfid sich die Wintereigenschaften überproportional verbessern während das Steifigkeitsverhalten bei hohen Dehnungen auf gleichem Niveau verbleibt oder sich sogar verbessert. Dadurch ist es möglich den Zielkonflikt zwischen Tieftemperaturflexibilität und statischer Steifigkeit bei hoher Dehnung zu entkoppeln. Dies gilt nicht nur für den Fahrzeuglaufstreifen, sondern auch für weitere innere Reifenbauteile. Die Kautschukmischungen für die weiteren inneren Reifenbauteile werden im Folgenden zusammengefasst, und wie in der Reifentechnologie üblich, auch als body compounds oder body-Mischungen bezeichnet.

Weitere Anwendung findet die erfindungsgemäße Kautschukmischung in der Mischungsentwicklung für Riemen und Gurte, insbesondere für Fördergurte.

Im täglichen Einsatz unterliegt insbesondere die Laufseite von Fördergurten starken mechanischen Beanspruchungen, z. B. bei Umlenkung an Antriebs-, Umlenk- und / oder Knicktrommeln und Aushalten der auftretenden Zugkräfte. Daher sind die Tieftemperaturflexibilität, insbesondere in den kühleren Jahreszeiten oder bei Einsatz in Permafrostgebieten, und die statische Steifigkeit bei hohen Dehnungen von großer Bedeutung.

Die Kautschukmischung enthält 30 - 100 phr zumindest eines festen Dienkautschuks. Der feste Dienkautschuk ist ausgewählt aus der Gruppe bestehend aus natürlichem Polyisopren und / oder synthetischem Polyisopren und / oder Polybutadien und / oder Styrol-Butadien-Copolymer und / oder lösungspolymerisierte Styrol-Butadien-Copolymer und / oder emulsionspolymerisierte Styrol-Butadien-Copolymer und / oder Styrol-Isopren-Butadien-Terpolymer und / oder Butylkautschuk und / oder Halobutylkautschuk und / oder Ethylen-Propylen-Dien-Kautschuk und / oder Chloropren-Kautschuk.

Vorzugsweise enthält die Kautschukmischung 0 bis 30 phr, wenigstens aber 0,1 phr, insbesondere wenigstens 0,5 phr, natürliches und / oder synthetisches Polyisopren und / oder 0 bis 50 phr, wenigstens aber 0,1 phr, insbesondere wenigstens 0,5 phr, Butadienkautschuk (BR), bevorzugt einen high-cis Butadien-Kautschuk mit einem cis-Anteil von größer oder gleich 90 Gew. -%, und / oder 0 bis 100 phr, wenigstens aber 0,1 phr, insbesondere wenigstens 0,5 phr, Styrol-Butadienkautschuk (SBR).

Der SBR ist bevorzugt ein lösungspolymerisierten Styrol-Butadienkautschuk (SSBR) oder ein emulsionspolymerisierten Styrol-Butadienkautschuk (ESBR).

Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.

Enthält die Kautschukmischung festes Polybutadien (BR), handelt es sich bevorzugt um cis-1,4-Polybutadien mit einem cis-1,4-Anteil größer oder gleich 90 Gew.-%, welches z. B. durch Lösungspolymerisation in Anwesenheit von Katalysatoren vom Typ der seltenen Erden hergestellt werden kann. Die Verblendung von Kautschukmischungen mit cis-Polybutadien wird durchgeführt, um die Glasübergangstemperatur der Mischung zu senken und dadurch die Wintereigenschaften (Eis- und Schneegriff) des Reifens zusätzlich zu verbessern. Es kann beispielsweise aber auch ein festes Polybutadien mit einem Vinyl-Anteil zwischen 10 - 70% verwendet werden.

Der oder die verwendeten oben genannten Dienkautschuk oder Dienkautschuke kann oder können hierbei mit primären oder sekundären Aminogruppen und / oder Alkoxysilylgruppen und / oder OH-Gruppen und / oder Epoxidgruppen und / oder Carboxylgruppen und / oder Mercaptogruppen und / oder weiteren, dem Fachmann bekannten, Gruppen modifiziert sein.

Die Kautschukmischung enthält 5 - 50 phr zumindest eines niedrigviskosen und flüssigen Kautschuks. Der niedrigviskose und flüssige Kautschuk hat vorteihafterweise ein Molekulargewicht von 1500 - 12000 g / mol, besonderes bevorzugt ein Molekulargewicht von 2500 - 9000g/mol. Bevorzugt ist, wenn es sich bei dem flüssigen Kautschuk um einen flüssigen Polybutadienkautschuk handelt.

Vorteilhaft ist es, wenn der flüssige Polybutadienkautschuk einen Anteil an 1,4 cis-Doppelbindungen größer oder gleich 70% hat.

Mit derartigem flüssigen Polybutadien werden besonders gute Wintereigenschaften erzielt und gleichzeitig wirkt es auf die Mischung viskositätssenkend, so dass auf einen Teil der zusätzlich benötigten Weichmacher verzichtet werden kann.

Des Weiteren kann die Kautschukmischung 0 - 50 phr, insbesondere 0,1 phr, insbesondere wiederum wenigstens 0,5 phr, zumindest eines weiteren polaren oder unpolaren Kautschuks enthalten.

Der polare oder unpolare Kautschuk ist herbei ausgewählt aus der Gruppe, bestehend aus Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer. Insbesondere zur Herstellung technischer Gummiartikel, abweichend von Fahrzeugreifen, werden diese Kautschuke Verwendung finden.

Erfindungswesentlich ist, dass die Kautschukmischung, neben dem niedrigviskosen und flüssigen Kautschuk 0,1-10 phr, bevorzugt 0,1-5 phr Tetrabenzylthiuramdisulfid (TBzTD) als Thiurambeschleuniger enthält.

Es ist allerdings durchaus möglich der Kautschukmischung noch weitere Vulkanisationsbeschleuniger hinzuzufügen, insbesondere in Mengen von 0,1 - 5 phr. Diese Vulkanisationsbeschleuniger sind ausgewählt aus der Gruppe, bestehend aus Thiazolbeschleuniger, Mercaptobeschleuniger, Sulfenamidbeschleuniger, Guanidinbeschleuniger, Dithiocarbamatbeschleuniger, Aminbeschleuniger, Thioharnstoffe und / oder sonstige Beschleuniger.

In der Kautschukmischung ist amorphe und / oder Fällungskieselsäure in Mengen von 0 - 150 phr, bevorzugt in Mengen von 0 - 120 phr, wenigstens allerdings in Mengen von 0,1 phr, insbesondere wenigstens in Mengen von 0,5 phr, enthalten. Es können alle dem Fachmann bekannten Kieselsäuren verwendet werden, wobei es besonders vorteilhaft ist, wenn amorphe und / oder Fällungskieselsäure mit einer BET-Oberfläche von größer oder gleich 100 m² / g eingesetzt wird.

Die BET-Oberfläche ist die Stickstoff-Oberfläche gemäß DIN 66131 und DIN 66132 und dient der Charakterisierung vor allem der hellen Füllstoffe.

Des Weiteren enthält die Kautschukmischung ein Kupplungsagenz in Mengen von 0 - 25 phr, bevorzugt 0 - 20 phr, besonders bevorzugt 0 - 15 phr, wenigstens aber 0,1 phr, insbesondere wenigstens 0,5 phr. Das Kupplungsagenz dient zur Verbesserung der Verarbeitbarkeit und zur Anbindung der Kieselsäure und anderer ggf. vorhandener polarer Füllstoffe an die Polymermatrix und reagiert mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Kupplungsagenz findet bevorzugt Silan Verwendung und es können dabei alle dem Fachmann bekannten Silan-Kupplungsagenzien verwendet werden.

Die Kautschukmischung enthält als dunklen Füllstoff 1 - 100 phr, bevorzugt 5 - 80 phr Ruß. Vorteilhaft ist es, wenn der Ruß eine DBP-Zahl größer oder gleich 55 cm³ / 100g besitzt. Die DBP-Zahl gemäß ASTM D 2414 bestimmt das spezifische Absorptionsvolumen eines Rußes oder eines hellen Füllstoffes mittels Dibutylphthalat.

Weitere Zusatzstoffe beinhaltet im Wesentlichen Weichmacher, Wachse, Alterungsschutzmittel, Mastikationshilfsmittel und Aktivatoren.

Der Mengenanteil der Gesamtmenge an Zusatzstoffen beträgt 2 bis 200 phr, bevorzugt 2 bis 150 phr, besonders bevorzugt 5 bis 100 phr.

Die erfindungsgemäße Kautschukmischung enthält weiterhin 0,1 - 100 phr, bevorzugt 0,1 - 80 phr, zumindest eines Weichmacheröls, wobei das Weichmacheröl ein Mineralöl ist, das ausgewählt ist aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Die Vulkanisation wird bevorzugt in Anwesenheit von Schwefel durchgeführt. Der Schwefel wird im letzten Mischungsschritt in den vom Fachmann gebräuchlichen Mengen von 0,2 - 8 phr der Kautschukmischung zugesetzt.

Die zusätzliche Zugabe zumindest eines niedrigviskosen und flüssigen Kautschuks und Tetrabenzylthiuramdisulfid (TBzTD) erfordert, aufgrund der schwefelspendenden Eigenschaft des TBzTD und der Konsumation von TBzTD und Schwefel durch das flüssige Polymer, eine individuelle Anpassung der weiteren Beschleuniger und des Schwefels.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht. Zur Verwendung in Fahrzeugreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung soll nun anhand von Vergleichs- und Ausführungsbeispielen, die in der Tabelle 1 zusammengefasst sind, näher erläutert werden.

Bei sämtlichen in der Tabelle 1 enthaltenen Mischungsbeispielen sind die angegebenen Mengenangaben Gewichtsteile, die auf 100 Gewichtsteile des festen Gesamtkautschuks bezogen sind. Die Vergleichsmischungen sind mit V1, V2 bzw. V3 gekennzeichnet, die erfindungsgemäße Mischung ist mit E gekennzeichnet. Die Mischung V1 stellt die Basismischung dar, in V2 wurde zusätzlich zu V1 TBzTD hinzugefügt, während in V3 zusätzlich zu V 1 ein flüssiger Kautschuk hinzugefügt wurde. Die Mischung E1 stellt dann das kombinierte zusätzliche Hinzufügen von TBzTD und eines flüssigen Kautschuks zu V1 dar.

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt, die im unteren Teil der Tabelle 1 dargestellt ist. Für die Tests an Prüfkörpern wurden folgende Testverfahren angewandt:
- Shore-A-Härte bei Raumtemperatur gemäß DIN 53 505
- Spannungswerte bei 300% statischer Dehnung bei Raumtemperatur gemäß DIN 53 504
- Speichermodul G' unter Torsionsbedingungen gemäß DIN 53 529 mit Vulkanisaten bei einer Temperatur von 70°C, einer Torsionsfrequenz von 1Hz und einer Materialdehnung von 0,25%
- dynamischer Speichermodul E' bei -15 °C gemäß DIN 53 513 aus Messung mit konstanter Spannungsamplitude von 50 ± 30 N bei einer Verformung von 10 Hz

**Tabelle 1**

| **Bestandteile** | **Einheit** | **V1** | **V2** | **V3** | **E1** |
|---|---|---|---|---|---|
| NR /BR / SSBR^{a} | phr | 100 | 100 | 100 | 100 |
| Flüssiger Kautschuk^{b} | phr | - | - | 33 | 33 |
| Kieselsäure^{c} | phr | 80 | 80 | 80 | 80 |
| Weichmacher | phr | 33 | 33 | - | - |
| Alterungsschutzmittel | phr | 5,5 | 5,5 | 5,5 | 5,5 |
| ZnO, Stearinsäure und Prozesshilfsmittel | phr | 4,5 | 4,5 | 4,5 | 4,5 |
| Silan | phr | 6,1 | 6,1 | 6,1 | 6,1 |
| TBzTD^{d} | phr | - | 0,2 | - | 0,2 |
| Weitere Beschleuniger | phr | 4,5 | 4,5 | 5,3 | 5,3 |
| Schwefel | phr | 1,5 | 1,5 | 2 | 2 |

| **Eigenschaften** | | | | | |
|---|---|---|---|---|---|
| Härte bei RT | Shore A | 72 | 73 | 72 | 71 |
| Spannungswert 300 % | N/mm² | 10,2 | 10,5 | 10,5 | 10,9 |
| G' bei 0,25% | MPa | 3384 | 3660 | 3509 | 3004 |
| E' bei - 15°C | MPa | 50,6 | 49,9 | 48,6 | 36,4 |

| | | | | | |
|---|---|---|---|---|---|
| ^{a} NR: TSR, Fa. Dow Chemicals; BR: SE-BR-1220M, Fa. Dow Chemicals; SSBR: NS116, Fa. Nippon Zeon ^{b} flüssiger BR, Polyoel^{®} 130, Fa. Degussa ^{c} Ultrasil^{®} VN 3, Fa.Degussa ^{d} TBzTD, Fa. Flexsys | | | | | |

Der Spannungswert bei 300% ist ein Maß für die Steifigkeit der Vulkanisate bei hohen Dehnungen und hohe Spannungswerte gelten als Indiz für ein gutes Handlingpotenzial der Mischung und ein gutes Trockenbremsverhalten bei Verwendung im Reifen. Je kleiner der dynamische Modul E' bei -15 °C, desto höher ist die Tieftemperaturflexibilität der Vulkanisate. Bei Reifen geht ein kleiner dynamischer Modul E' bei -15 °C mit guten Wintereigenschaften für Fahrzeugreifen einher. Ein hoher Wert für G' bei niedrigen Dehnungen, wie z.B. bei 0,25% Dehnung, impliziert einen hohen Payne-Effekt und damit einhergehend eine schlechte Füllstoffdispersion. Dies wiederum hat schlechte Abriebseigenschaften des Vulkanisats zur Folge.

Aus der Tabelle 1 wird ersichtlich, dass eine Kombination eines niedrigviskosen und flüssigen Polymers mit TBzTD, gemäß Mischung E1, eine deutliche Erhöhung der Steifigkeit bei flüssigen gleichzeitiger Erhöhung der Steifigkeit bei hohen Dehnungen und eine deutliche Verbesserung der Tieftemperaturflexibilität, folglich der Wintereigenschaften für Fahrzeugreifen, mit sich bringt.

## Patentansprüche

1. Kautschukmischung, **gekennzeichnet durch** folgende Zusammensetzung:
- 30 - 100 phr zumindest eines festen Dienkautschukes;
- 5 - 50 phr zumindest eines niedrigviskosen und flüssigen Kautschuks;
- 0,1 - 10 phr Tetrabenzylthiuramdisulfid;
- 0,1-150 phr zumindest einer amorphen und / oder Fällungskieselsäure;
- 0 - 25 phr zumindest eines Kupplungsagenz;
- 1 - 100 phr zumindest eines Rußes;
- 2 - 200 phr weitere Zusatzstoffe.

2. Kautschukmischung nach Anspruch 1, **dadurch gekennzeichnet, dass** zumindest ein Dienkautschuk ausgewählt ist aus der Gruppe, bestehend aus natürlichem Polyisopren und / oder synthetischem Polyisopren und / oder Polybutadien und / oder Styrol-Butadien-Copolymer und / oder lösungspolymerisiertes Styrol-Butadien-Copolymer und / oder emulsionspolymerisiertes Styrol-Butadien-Copolymer und / oder Styrol-Isopren-Butadien-Terpolymer und / oder Butylkautschuk und / oder Halobutylkautschuk und / oder Ethylen-Propylen-Dien-Kautschuk und / oder Chloropren-Kautschuk.

3. Kautschukmischung nach Anspruch 1 oder 2, **dadurch gekennzeichnet, dass** sie 0 bis 30 phr natürliches und / oder synthetisches Polyisopren enthält.

4. Kautschukmischung nach Anspruch 3, **dadurch gekennzeichnet, dass** sie wenigstens 0,1 phr, insbesondere wenigstens 0,5 phr, natürliches und / oder synthetisches Polyisopren enthält.

5. Kautschukmischung nach einem der Ansprüche 1 bis 4, **dadurch gekennzeichnet, dass** sie 0 bis 50 phr Butadienkautschuk enthält.

6. Kautschukmischung nach Anspruch 5, **dadurch gekennzeichnet, dass** sie wenigstens 0,1 phr, insbesondere wenigstens 0,5 phr, Butadienkautschuk enthält.

7. Kautschukmischung nach Anspruch 5 oder 6, **dadurch gekennzeichnet, dass** der Butadienkautschuk ein high-cis Butadienkautschuk ist.

8. Kautschukmischung nach Anspruch 7, **dadurch gekennzeichnet, dass** der high-cis Butadienkautschuk einen cis-Anteil von größer oder gleich 90 Gew. -% hat.

9. Kautschukmischung nach einem der Ansprüche 1 bis 8, **dadurch gekennzeichnet, dass** sie 0 bis 100 phr Styrol-Butadienkautschuk enthält.

10. Kautschukmischung nach Anspruch 9, **dadurch gekennzeichnet, dass** sie wenigstens 0,1 phr, insbesondere wenigstens 0,5 phr, Styrol-Butadienkautschuk enthält.

11. Kautschukmischung nach einem der Ansprüche 1 bis 10, **dadurch gekennzeichnet, dass** der niedrigviskose und flüssige Kautschuk ein flüssiger Polybutadienkautschuk ist.

12. Kautschukmischung nach Anspruch 11, **dadurch gekennzeichnet, dass** der flüssige Polybutadienkautschuk einen Anteil an 1,4 cis-Doppelbindungen größer oder gleich 70% hat.

13. Kautschukmischung nach einem der Ansprüche 1 bis 12, **dadurch gekennzeichnet, dass** der niedrigviskose und flüssige Kautschuk ein Molekulargewicht von 1500 - 12000 g / mol, bevorzugt 2500 - 9000 g / mol, hat.

14. Kautschukmischung nach einem der Ansprüche 1 bis 13, **dadurch gekennzeichnet, dass** der Mengenanteil von Tetrabenzylthiuramdisulfid 0,1 bis 5 phr beträgt.

15. Kautschukmischung nach einem der Ansprüche 1 bis 14, **dadurch gekennzeichnet, dass** die Menge der amorphen und / oder Fällungskieselsäure 0,1-120 phr beträgt.

16. Kautschukmischung nach einem der Ansprüche 1 bis 15, **dadurch gekennzeichnet, dass** die Menge des Kupplungsagenz wenigstens 0,1 phr, insbesondere wenigstens 0,5 phr, beträgt.

17. Kautschukmischung nach einem der Ansprüche 1 bis 16, **dadurch gekennzeichnet, dass** die Menge des Rußes 5-80 phr beträgt.

18. Kautschukmischung nach einem der Ansprüche 1 bis 17, **dadurch gekennzeichnet, dass** sie 0,1-100 phr zumindest eines Weichmacheröles enthält.

19. Verwendung einer Kautschukmischung nach einem der Ansprüche 1 bis 18 zur Herstellung eines Reifens.

20. Verwendung einer Kautschukmischung nach Anspruch 19 zur Herstellung des Laufstreifens und / oder einer Body-Mischung eines Reifens.

21. Verwendung einer Kautschukmischung nach einem der Ansprüche 1 bis 18 zur Herstellung eines Gurtes und / oder eines Riemens.

## Claims

1. Rubber mixture, **characterized by** the following constitution:
- from 30 to 100 phr of at least one solid diene rubber;
- from 5 to 50 phr of at least one low-viscosity, liquid rubber;
- from 0.1 to 10 phr of tetrabenzylthiuram disulphide;
- from 0.1 to 150 phr of at least one amorphous and/or precipitated silica;
- from 0 to 25 phr of at least one coupling agent;
- from 1 to 100 phr of at least one carbon black;
- from 2 to 200 phr of further additives.

2. Rubber mixture according to Claim 1, **characterized in that** at least one diene rubber has been selected from the group consisting of natural polyisoprene and/or synthetic polyisoprene and/or polybutadiene and/or styrene-butadiene copolymer and/or solution-polymerized styrene-butadiene copolymer and/or emulsion-polymerized styrene-butadiene copolymer and/or styrene-isoprene-butadiene terpolymer and/or butyl rubber and/or halobutyl rubber and/or ethylene-propylene-diene rubber and/or chloroprene rubber.

3. Rubber mixture according to Claim 1 or 2, **characterized in that** it comprises from 0 to 30 phr of natural and/or synthetic polyisoprene.

4. Rubber mixture according to Claim 3, **characterized in that** it comprises at least 0.1 phr, in particular at least 0.5 phr, of natural and/or synthetic polyisoprene.

5. Rubber mixture according to any of Claims 1 to 4, **characterized in that** it comprises from 0 to 50 phr of butadiene rubber.

6. Rubber mixture according to Claim 5, **characterized in that** it comprises at least 0.1 phr, in particular at least 0.5 phr, of butadiene rubber.

7. Rubber mixture according to Claim 5 or 6, **characterized in that** the butadiene rubber is a high-cis butadiene rubber.

8. Rubber mixture according to Claim 7, **characterized in that** the cis-content of the high-cis butadiene rubber is greater than or equal to 90% by weight.

9. Rubber mixture according to any of Claims 1 to 8, **characterized in that** it comprises from 0 to 100 phr of styrene-butadiene rubber.

10. Rubber mixture according to Claim 9, **characterized in that** it comprises at least 0.1 phr, in particular at least 0.5 phr, of styrene-butadiene rubber.

11. Rubber mixture according to any of Claims 1 to 10, **characterized in that** the low-viscosity, liquid rubber is a liquid polybutadiene rubber.

12. Rubber mixture according to Claim 11, **characterized in that** the content of 1,4 cis-double bonds in the liquid polybutadiene rubber is greater than or equal to 70%.

13. Rubber mixture according to any of Claims 1 to 12, **characterized in that** the molar mass of the low-viscosity, liquid rubber is from 1500 to 12 000 g/mol, preferably from 2500 to 9000 g/mol.

14. Rubber mixture according to any of Claims 1 to 13, **characterized in that** the quantitative proportion of tetrabenzylthiuram disulphide is from 0.1 to 5 phr.

15. Rubber mixture according to any of Claims 1 to 14, **characterized in that** the amount of the amorphous and/or precipitated silica is from 0.1 to 120 phr.

16. Rubber mixture according to any of Claims 1 to 15, **characterized in that** the amount of the coupling agent is at least 0.1 phr, in particular at least 0.5 phr.

17. Rubber mixture according to any of Claims 1 to 16, **characterized in that** the amount of the carbon black is from 5 to 80 phr.

18. Rubber mixture according to any of Claims 1 to 17, **characterized in that** it comprises from 0.1 to 100 phr of at least one plasticizer oil.

19. Use of a rubber mixture according to any of Claims 1 to 18 for producing a tyre.

20. Use of a rubber mixture according to Claim 19 for producing the tread and/or a body mixture of a tyre.

21. Use of a rubber mixture according to any of Claims 1 to 18 for producing a belt and/or a drive belt.

## Revendications

1. Mélange de caoutchouc, **caractérisé par** la composition suivante :
- 30 à 100 phr d'au moins un caoutchouc diène solide ;
- 5 à 50 phr d'au moins un caoutchouc faiblement visqueux et liquide ;
- 0,1 à 10 phr de disulfure de tétrabenzylthiuram ;
- 0,1 1 à 150 phr d'au moins une silice amorphe et/ou précipitée ;
- 0 à 25 phr d'au moins un agent de couplage ;
- 1 à 100 phr d'au moins une suie ;
- 2 à 200 phr d'additifs supplémentaires.

2. Mélange de caoutchouc selon la revendication 1, **caractérisé en ce qu'**au moins un caoutchouc diène est choisi dans le groupe constitué par le polyisoprène naturel et/ou le polyisoprène synthétique et/ou le polybutadiène et/ou un copolymère styrène-butadiène et/ou un copolymère styrène-butadiène polymérisé en solution et/ou un copolymère styrène-butadiène polymérisé en émulsion et/ou un terpolymère styrène-isoprène-butadiène et/ou un caoutchouc de butyle et/ou un caoutchouc d'halogénobutyle et/ou un caoutchouc d'éthylène-propylène-diène et/ou un caoutchouc de chloroprène.

3. Mélange de caoutchouc selon la revendication 1 ou 2, **caractérisé en ce qu'**il contient 0 à 30 phr de polyisoprène naturel et/ou synthétique.

4. Mélange de caoutchouc selon la revendication 3, **caractérisé en ce qu'**il contient au moins 0,1 phr, notamment au moins 0,5 phr, de polyisoprène naturel et/ou synthétique.

5. Mélange de caoutchouc selon l'une quelconque des revendications 1 à 4, **caractérisé en ce qu'**il contient 0 à 50 phr d'un caoutchouc de butadiène.

6. Mélange de caoutchouc selon la revendication 5, **caractérisé en ce qu'**il contient au moins 0,1 phr, notamment au moins 0,5 phr, d'u n caoutchouc de butadiène.

7. Mélange de caoutchouc selon la revendication 5 ou 6, **caractérisé en ce que** le caoutchouc de butadiène est un caoutchouc de butadiène à teneur élevée en cis.

8. Mélange de caoutchouc selon la revendication 7, **caractérisé en ce que** le caoutchouc de butadiène à teneur élevée en cis a une proportion de cis supérieure ou égale à 90 % en poids.

9. Mélange de caoutchouc selon l'une quelconque des revendications 1 à 8, **caractérisé en ce qu'**il contient 0 à 100 phr d'un caoutchouc de styrène-butadiène.

10. Mélange de caoutchouc selon la revendication 9, **caractérisé en ce qu'**il contient au moins 0,1 phr, notamment au moins 0,5 phr, d'un caoutchouc de styrène-butadiène.

11. Mélange de caoutchouc selon l'une quelconque des revendications 1 à 10, **caractérisé en ce que** le caoutchouc faiblement visqueux et liquide est un caoutchouc de polybutadiène liquide.

12. Mélange de caoutchouc selon la revendication 11, **caractérisé en ce que** le caoutchouc de polybutadiène liquide a une proportion de doubles liaisons 1,4-cis supérieure ou égale à 70 %.

13. Mélange de caoutchouc selon l'une quelconque des revendications 1 à 12, **caractérisé en ce que** le caoutchouc faiblement visqueux et liquide a un poids moléculaire de 1 500 à 12 000 g/mol, de préférence de 2 500 à 9 000 g/mol.

14. Mélange de caoutchouc selon l'une quelconque des revendications 1 à 13, **caractérisé en ce que** la proportion de disulfure de tétrabenzylthiuram est de 0,1 à 5 phr.

15. Mélange de caoutchouc selon l'une quelconque des revendications 1 à 14, **caractérisé en ce que** la quantité de silice amorphe et/ou précipitée est de 0,1 à 120 phr.

16. Mélange de caoutchouc selon l'une quelconque des revendications 1 à 15, **caractérisé en ce que** la quantité de l'agent de couplage est d'au moins 0,1 phr, notamment d'au moins 0,5 phr.

17. Mélange de caoutchouc selon l'une quelconque des revendications 1 à 16, **caractérisé en ce que** la quantité de la suie est de 5 à 80 phr.

18. Mélange de caoutchouc selon l'une quelconque des revendications 1 à 17, **caractérisé en ce qu'**il contient 0,1 à 100 phr d'au moins une huile plastifiante.

19. Utilisation d'un mélange de caoutchouc selon l'une quelconque des revendications 1 à 18 pour la fabrication d'un pneu.

20. Utilisation d'un mélange de caoutchouc selon la revendication 19 pour la fabrication de la bande de roulement et/ou d'un mélange de carcasse d'un pneu.

21. Utilisation d'un mélange de caoutchouc selon l'une quelconque des revendications 1 à 18 pour la fabrication d'une ceinture et/ou d'une courroie.
